# EUROPEAN PATENT SPECIFICATION

(11) **EP 1 512 264 B1**
(45) Date of publication and mention of the grant of the patent: **30.01.2008**
(21) Application number: 03729957.5
(22) Date of filing: 30.04.2003
(51) Int. Cl.: H04L 29/06, G06F 17/30

(54) **Communication system, mobile device and method for storing pages on a mobile device**
Kommunikationssystem, Mobileinrichtung und Verfahren zur Speicherung von Seiten in einer Mobileinrichtung
Système de communication, dispositif mobile associé et procédé pour mémoriser des pages sur un dispositif mobile

(30) Priority: 02.05.2002 SG 200202594
(43) Date of publication of application: 09.03.2005
(73) Proprietor: Giesecke & Devrient GmbH, 81677 München (DE)
(72) Inventor: NANSI, Shekhar, 5000C Marine Parade Road Singapore 44928 (SG); LIM, Bee, Gek, Singapore 640693 (SG); LAI, Kah, Shin, Singapore 610348 (SG); LI, Yongjia, Singapore 299717 (SG)
(74) Representative: Klunker . Schmitt-Nilson . Hirsch
(86) International application number: PCT/EP2003/004564
(87) International publication number: WO 2003/094474

(56) References cited:
- WO-A-00/65800
- WO-A-98/57474
- GB-A- 2 373 967
- NOKIA: "Nokia 7110 FAQ page" WEB PAGE, [Online] 25 January 2002 (2002-01-25), pages 1-6, XP002251656 Retrieved from the Internet: <URL:http://www.filibeto.org/mobile/faq.ht ml> [retrieved on 2003-08-18]
- LILJEBERG M ET AL: "OPTIMIZING WORLD-WIDE WEB FOR WEAKLY CONNECTED MOBILE WORKSTATIONS:AN INDIRECT APPROACH" INTERNATIONAL WORKSHOP ON SERVICES IN DISTRIBUTED AND NETWORKED ENVIRONMENTS, XX, XX, 5 June 1995 (1995-06-05), pages 132-139, XP000764774

## Description

### Field of the invention

The present invention relates to a communications system, mobile device therefor and methods of storing pages on a mobile device. It is particularly concerned with aspects that might be deemed to be within the purview of a browser and to downloading information into mobile devices, such as mobile telephones, Personal Digital Assistants (PDAs), laptop computers and the like.

### Background

Data communication is possible with mobile phones using available technology. Current known technologies include the Short Message (SM), and GPRS, while 3G technology is expected to be fully functional in the coming years. The actual data communication can be done using the Wireless Application Protocol (WAP), which is usually built in the mobile phone device, or through a browser, which is usually built in the Subscriber Identification Module (SIM).

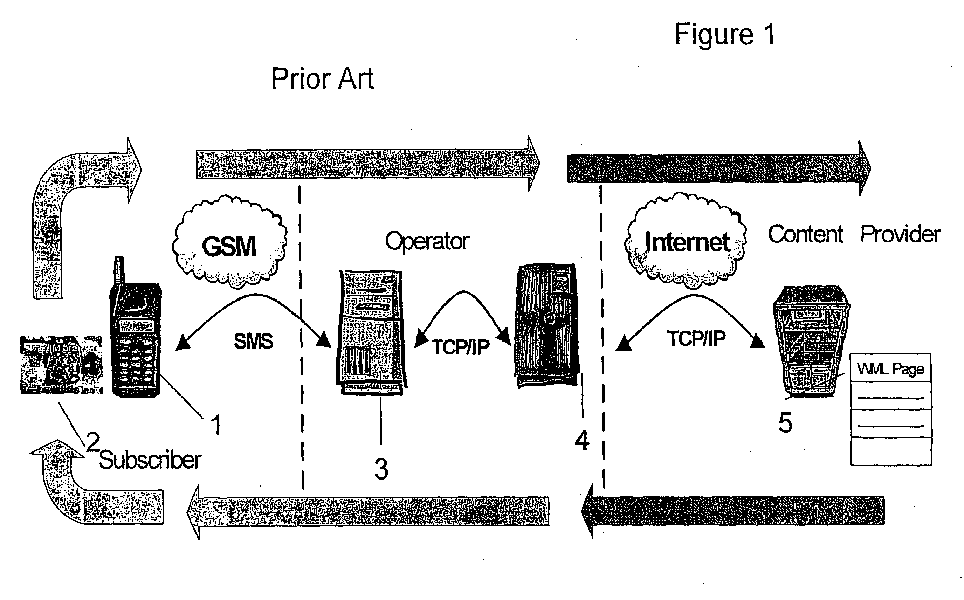

A typical browsing operation of a mobile device is represented schematically in figure 1. The telephone 1, has a SIM card 2 with its own browser. The user of the mobile telephone 1, seeking some form of online information or data (e.g. a web page) uses the keypad on the telephone 1 to request that information. In case of WAP, the telephone first checks to see if it already has an open connection to the WAP gateway. If it does not have such a connection, it dials up a provider to obtain the necessary connection. If it does have such a connection, then it uses the WAP protocols. The information request is translated into a Uniform Resource Locator (URL) request by the WAP Gateway and a request is sent over the internet. A radio terminal for browsing the Internet is described in the International Publication WO 00/65800.

In case of an SM, this request involves the SIM generating a necessary request byte code in form of a SM which is sent to the Short Message Service Centre (SMSC) of the service provider (e.g. Telecom Operator). On the mobile operator side, this is passed on to a Wireless Internet Gateway (WIG). The information request is translated into a Uniform Resource Locator (URL) request by the WIG and a request is sent over the internet / intranet.

At the WIG 4, the URL request is forwarded, over the Internet / Intranet, as a normal HTTP request to the relevant server 5 on which the requested WML content is stored.

The content of the retrieved page retrieved is in textual Wireless Markup Language (WML) code and is transmitted over the Internet / Intranet back to WIG 4. There it is compiled and converted into bytecode and sent back to the telephone 1, via the SMSC 3 and, in particular, back to the browser on the SIM card 2. At that point the relevant page is executed by the browser in the SIM, which might usually mean that it is displayed on the screen of the telephone 1.

Similar systems and methods are used in other mobile devices, although not all will have a SIM card or equivalent removable card, but have the relevant browser, memory, processor and software provided in other ways.

There are several problems with this usual system. Firstly, it is slow; every page, deck of pages or application must be downloaded individually from the internet server 5. Each such request must then also compete with other requests made by other people also seeking new pages etc at the same time and the more such requests there are at any time, the slower the systems become. Additionally, there is the problem that a SIM Application Toolkit (SAT) must be used in developing all such services for use on the SIM card or equivalent of the mobile device.

The aim of the present invention is to alleviate at least partially one or more of the above-mentioned problems.

### Summary of the Invention

According to one aspect of the present invention there is provided a method according to claim 1.

According to a second aspect of the present invention there is provided a mobile device according to claim 8.

According to a third aspect of the present invention there is provided a communications system according to claim 18.

For any or all of the above aspects, the mobile device may be a mobile telephone or other possible devices like a PDA.

For instance, the invention provides a mobile telephone with an additional plug-in on its SIM card, in the form of a domestic browser with a domestic site. When a mobile user wants to access a page, such as an internet page on his telephone, the domestic browser searches a first file in a domestic site for the page identifier to see if the page is immediately accessible. If it is, then it retrieves the data from a second file in the domestic site and executes it for display. On the other hand, if the page identifier cannot be located in the domestic site, the domestic browser simply returns a negative result, at which point the SIM browser on the SIM card has the page request transmitted to have the page retrieved from the Internet. The user of the mobile telephone does not determine whether any page is to be saved in the domestic site, instead it is determined by the mobile operator or the page writer, by use of codes written into the WML page contents. The operator can also transmit push pages onto the mobile telephone and have them saved, updated or deleted in the domestic site without any user intervention.

### Brief description of the drawings

The present invention will be further described by way of non-limitative examples, with reference to the accompanying drawings in which :-
- Figure 1: is a schematic representation of previously known browsing operations;
- Figure 2: is a schematic representation of an aspect of a URL request according to the present invention;
- Figure 3: is a schematic representation of an aspect of cache changing according to one embodiment of the present invention;
- Figure 4: is a schematic representation of browsing operations according to the present invention;
- Figures 5a & 5b: are schematic representations of aspects of the operation of an alternative embodiment of the present invention;
- Figures 6a & 6b: are schematic representations of the updating operation of an alternative embodiment of the present invention;
- Figure 7: is a schematic representation of an alternative updating operation of the present invention; and
- Figure 8: is a schematic representation of how the present invention can be used to create dynamic menus.

### Specific description

The present invention is exemplified in the following embodiment as an extension to a SIM browser on a SIM card.

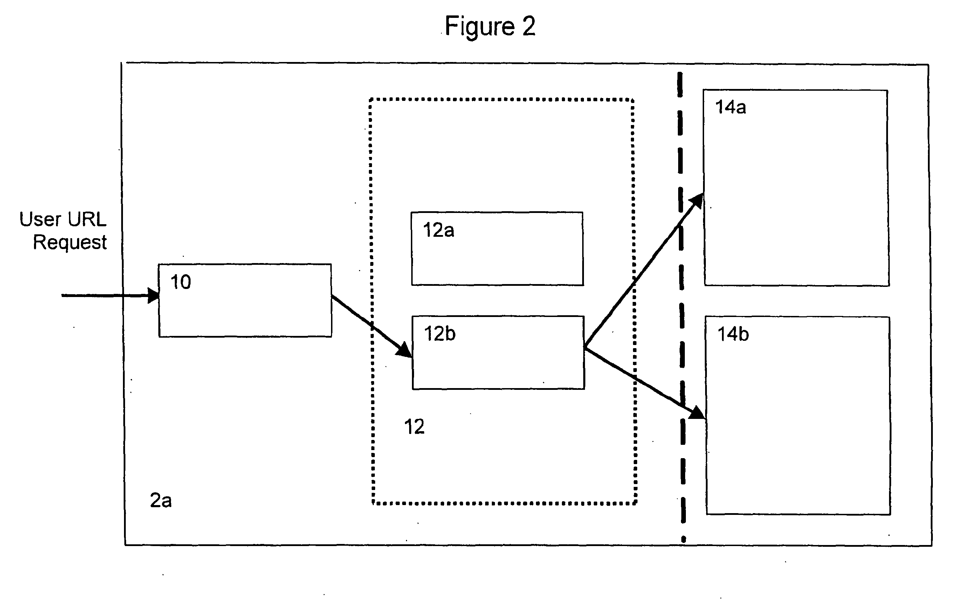

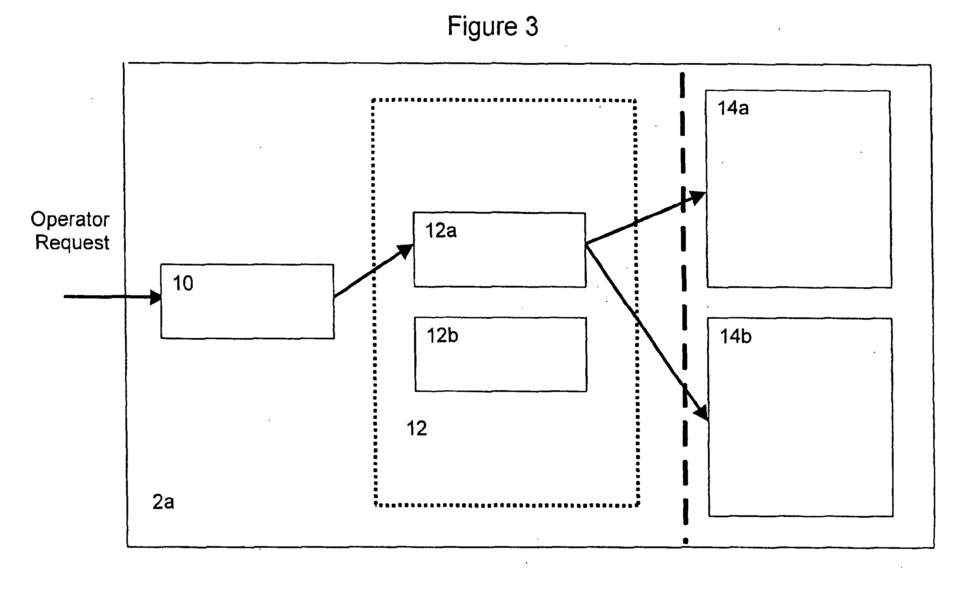

Figures 2 and 3 are schematic representations of a SIM card 2a according to a first aspect of the present invention. In both cases the card 2a has a SIM browser 10, a Domestic Browser (DOMB) 12 and a domestic site 14, connected together in that order. The domestic browser 12 has two plug-ins, DOMBIN 12a and DOMBOUT 12b. The domestic site 14 includes two elementary files, EF_{URL} 14a and EF_{bytecode} 14b. File EF_{URL} 14a stores a list of URLs whose contents are currently in the domestic site. File EF_{bytecode} 14b stores the actual URL content data in byte code form. Both plug-ins, DOMBIN 12a and DOMBOUT 12b are connected to both elementary files, EF_{URL} 14a and EF_{bytecode} 14b.

In use, the mobile user makes a request, which is translated into a user URL request. This passes through to the SIM browser 10, from whence it would, in known systems be passed out to the SMSC 3. However, in this embodiment of the present invention, the URL request is first intercepted by the domestic browser 12 and, more particularly, by the plug-in DOMBOUT 12b.

The role of the plug-in DOMBOUT 12b, as is represented in figure 2, is to intercept any URL request by the SIM browser 10 and to check if it is already in the domestic site 14. It does this by trying to locate the intercepted URL in file EF_{URL} 14a. If the URL is located there, then the respective data is retrieved from file EF_{bytecode} 14b and passed back to the SIM browser 10 for further processing. On the other hand, if the URL is not located in file EF_{URL} 14a, then the URL request is allowed to proceed normally as per a known manner, for instance as is described later.

In the above respects, the present invention acts much like one might expect of a cache. However, the invention particularly differs through the use of the second domestic browser plug-in DOMBIN 12a. This plug-in is not usually invoked during normal user browsing operations. Indeed, in this first embodiment it cannot be activated by the user. Instead it is activated by the mobile operator, that is the company providing the mobile network or another designated service provider.

Figure 3 illustrates schematically the role of the first domestic browser plug-in DOMBIN 12a and how URLs and the URL content are saved into or deleted from the domestic site 14.

The instruction to activate the first domestic browser plug-in DOMBIN 12a is sent by the mobile operator to the mobile telephone, where it is received by the SIM browser 10 and passed on to the domestic browser 12, in particular to plug-in DOMBIN 12a. What is sent by the operator will include a request that a cached URL be deleted or a particular URL be updated or downloaded. The operator request is in the form of a specific SMS message which is differentiated from a normal SM [e.g. Point-to-Point (SMS. PP)] message and basically contains a WML page in bytecode form with a special plug-in command embedded inside. The special command instructs the SIM browser 10 to invoke plug-in DOMBIN 12a to perform the relevant deletion or update/download operation.

In the case of deletion, plug-in DOMBIN 12a removes a particular URL from file EF_{URL} 14a and its corresponding data from file EF_{bytecode} 14b. This releases occupied slots for future URLs to be cached.

A URL download might occur if the operator decides to upload certain frequently accessed applications or pages onto the subscribers SIM card 2a, for instance for efficiency reasons. Alternatively, he might simply wish to encourage the use of particular pages. In this instance, plug-in DOMBIN 12a stores the URL in a free slot in file EF_{URL} 14a and its content in an appropriate slot in file EF_{bytecode} 14b.

In the case of an update, usually whenever there is freshly available information, the URL in file EF_{URL} 14a remains unchanged. However, the content data in file EF_{bytecode} 14b is removed and replaced with new content data.

The domestic browser 12 in the exemplary embodiment depends on an existing browser 10 working on the SIM card 2a and is an additional functionality added to that existing browser 10. This is achieved by attaching this additional functionality via a software hook (a point in the operation of a browser where an additional function can be implemented by an external software module) provided in the browser. In the absence of such a hook provision, the developer of the domestic browser 12 would have to enhance the existing browser to facilitate such a software hook. This additional functional module (plug-in DOMBOUT 12b) forces the SIM browser 10 first to check index file EF_{URL} 14a of the domestic site to see if the requested page is available in the domestic site. In case it is available then this page is retrieved and kept in an incoming message buffer of the SIM card 12a, and the SIM browser 10 treats that page as having been obtained correctly. This drastically reduces the time required to browse for certain pages.

The domestic site 14 handles the management of pages. It has the necessary functions to add / delete / update pages when instructed by an incoming message. A page sent to the SIM browser 10is first intercepted by this module. It checks if there is any instruction bundled in along with the regular page in the incoming message. If a command such as add / delete / update etc is found, then the command is executed to achieve the result as defined by the command. This module is also responsible for memory management, such as defragmentation and managing the index file (to show which pages are available on the domestic site). Besides supporting the add, delete and update commands, this module also supports several other commands, such as purge (delete all pages from the domestic site 14 and clear the index file EF_{URL} 14a), statistic (give details about the current status of the domestic site 14), acknowledge (generate a result success or failure answer for the command executed).

The exemplary embodiment is provided by way of additional software to an existing card. Where a browser already exists, no additional hardware is necessary.

The occurrence and frequency of deletion, updating or downloading applications or URLs and the trigger to delete, update or download applications or URLs are solely decided and initiated by the operator itself. It occurs without the mobile user's intervention and, possibly, even without his knowledge.

Unlike what might one expect from a normal cache, the contents of the cache in the present invention are not necessarily determined by the mobile user. It is not simply just a matter of first in first out, first in last out or lowest usage out. Instead, in this embodiment of the present invention, the entire content of the cache is determined by the mobile operator.

In the above, the changes to the content of the domestic site have only been described as being at the behest of the telephone operator. However, deletion, updating or downloading can be initiated when a user makes a request for a certain WML page. The DOMBIN plug-in is capable of returning the result of such delete / update / download request.

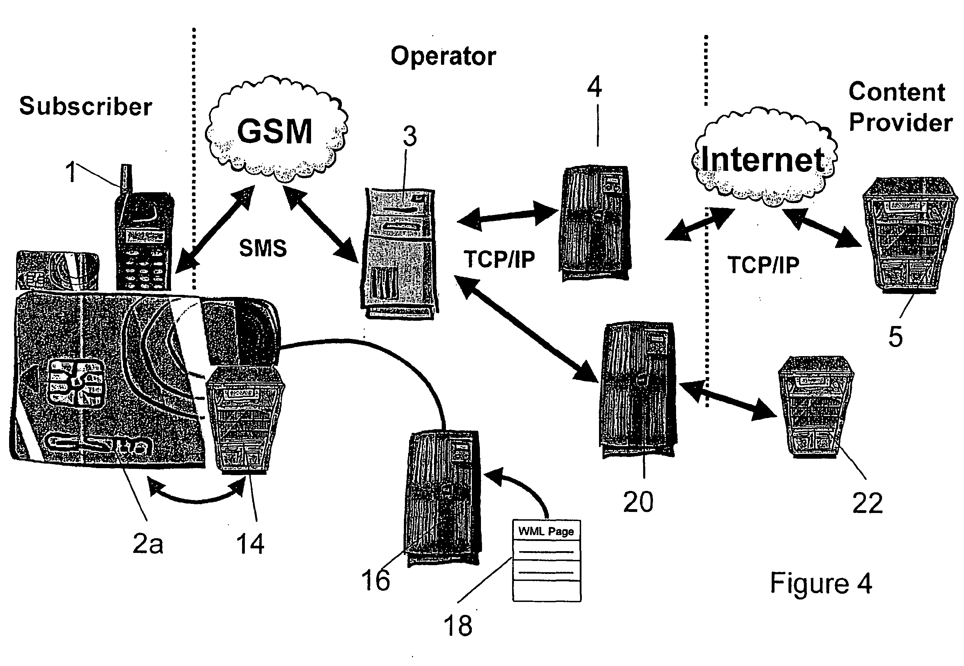

Figure 4 is a schematic representation of a browsing system according to the present invention. It includes many of the same components as the known browsing system illustrated in Figure 1, which are numbered as before. However, the SIM card 2a is different and, in addition, figure 4 includes the domestic browser service centre 16, an operator WML database 18 and an STA gateway 20. An STA gateway provides means for the telecom operator to service the user request without having a WIG server.

In case of an operation with STA Gateway, when a URL request is submitted to the SIM browser 10, then, as is described above with reference to figure 2, the domestic site 14 is checked. However, if the requested URL cannot be found in file EF_{URL} 14a, then the URL request is sent out as a SMS signal to a SMSC 3 on the mobile operator side, from whence it is passed to an STA gateway 20, where it is sent directly to another content provider 22.

The retrieved content is then sent back by the STA Gateway to the telephone 1 and SIM card 2a, via the SMSC 3 in the bytecode format understood by domestic browser. Unlike a WIG an STA Gateway is not capable of generating intermittent steps (Like Menus). Generally an STA Gateway receives the last SMS requesting for some information and these are then sent back in a format understood by the domestic browser.

The operator provides service centre 16. This is necessary where the operator only has a STA Gateway and in other situations where a WIG is not available to an operator. The Service centre 16 is another software utility which stores all the possible WML / Bytecode pages. It allows the operator to delete / update / download the pages to the domestic site without the WIG.

The relevant traffic between the SIM card 2a and service centre 16 is all one way, from service centre 16 to SIM card 2a.

The domestic browser service centre 16 is connected to a WML database 18, which contains the operator's WML pages, each of which includes a set of bytecode, each set being identifiable with a unique URL. When data on a SIM card 2a is to be updated, the service centre 16 downloads the URL and the bytecode from the WML database 18 and transmits it to the mobile telephone 1. The byte code is usually very lengthy and therefore would be packed, for instance as a concatenated SMS-PP, before being sent out.

When the destination telephone 1 receives the SMS-PP, it sends the URL and bytecode to the SIM card 2a with an ENVELOPE command, which stores more then one message in a virtual envelope. Depending on the WML pages sent, the SIM browser 10 may interpret this as contents to process and display for the user or just as a command to update or delete previously stored URLs and respective data or to download new URLs and respective data within the SIM card domestic site 14.

In everything described, how the pages are executed at the telephone, whether supplied from the service centre or via a WIG, depend on their contents and, in particular, on the presence (or absence) of three parameter plug-ins, P1 (commands like Add/Delete), P2 (Execute), and P3(Acknowledge). If the WML page designer wants to issue add, update, delete or some other commands along with a page to the domestic browser 14, he defines the command in the parameter P1 in the page, indicating that the page is for plug-in DOMBIN 12a on the SIM card 2a and that it should execute the indicated command. In addition, if Parameter P2 is indicated, this means the page code itself should be executed before it is added or deleted. P3 provides a facility on the backend to get back an acknowledgement from the domestic browser to indicate whether the command in P1 was executed successfully or had a problem. Additional plug-ins are also available to provide dynamic menu facilities, with such menus being downloaded according to user profile.

Whilst three parameters are described, the number and their functions can vary.

In the above embodiment pages to be acted upon by the domestic browser 12 are only provided direct from the operator, for instance from domestic browser service centre 16. Another embodiment, as described below, allows pages from other sources to be acted upon by the domestic browser 12.

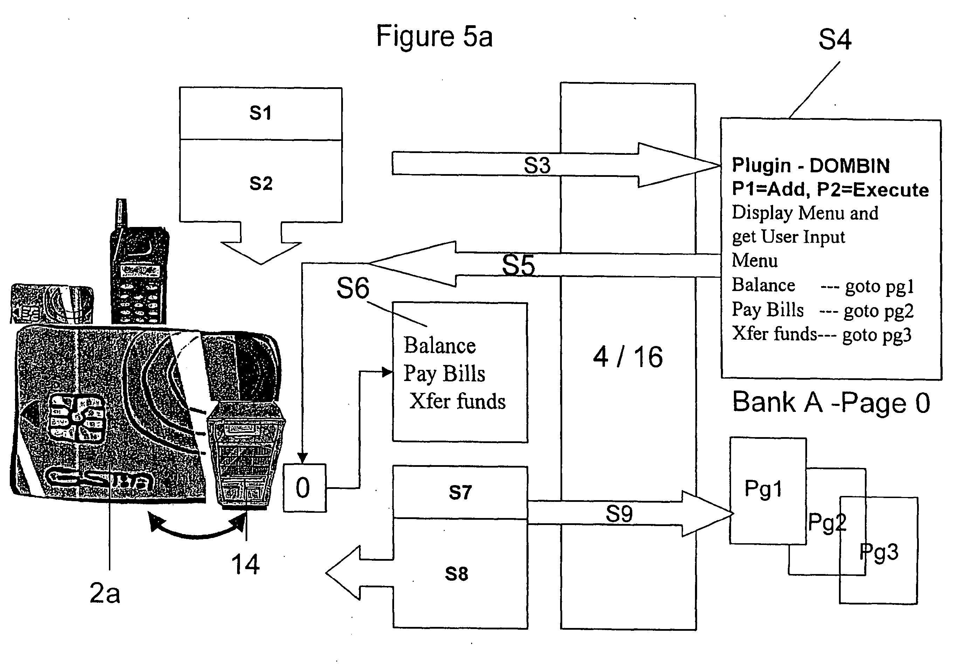

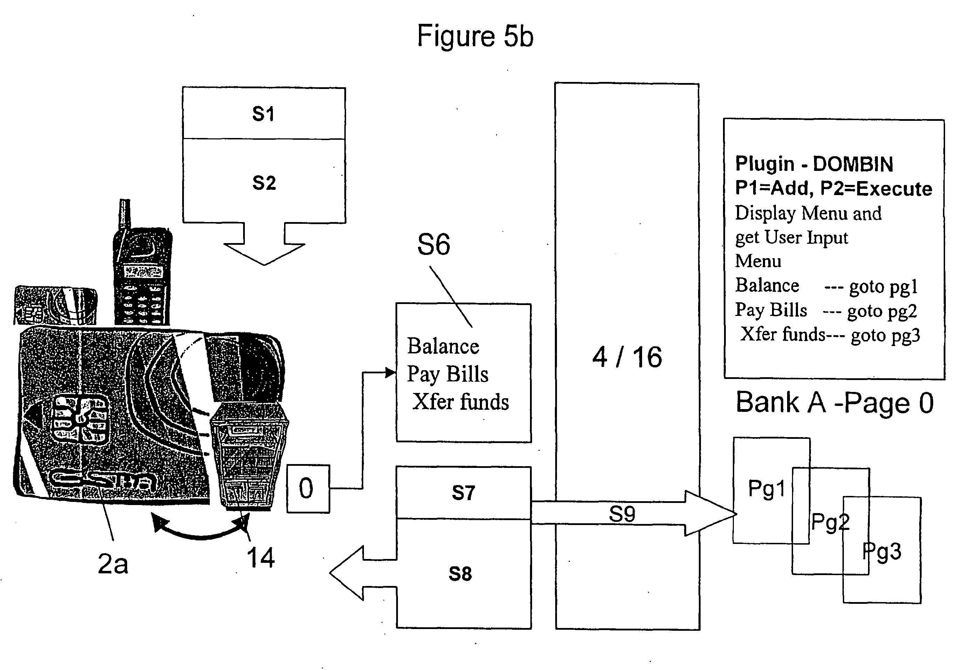

Figures 5a and 5b illustrate, schematically, the operation of an alternative embodiment, where pages from the SMSC 3 are provided to and acted upon by plug-in DOMBIN 12a on the SIM card 2a.

Figure 5a starts with the assumption that a URL for page 0 has been requested. In step S1 an instruction is received to go to page 0. Step S2 queries whether the requested page 0 is available on the domestic browser. In this instance, assuming that page 0 is not present, step S3 sends out the URL request in a known manner as previously described via the SMSC and WIG. The relevant page 0 is then accessed and retrieved on the internet at step S4 and transmitted back to the telephone 1 at step S5. There it is executed by the SIM browser 10 and displayed in step S6. In addition it is also added to the domestic browser cache 14 by plug-in DOMBIN 12a.

As can be seen in box S4, the accessed URL page 0 includes the two parameter plug-ins, P1 (Add) and P2 (Execute) discussed above. Thus it will require that the SIM card execute the page and that it also be passed to plug-in DOMBIN 12a to add it to the domestic browser cache 14. As part of its execution instructions it includes "Display Menu" and "get User Input" instructions, i.e. that the SIM browser 10 should display a menu and expect a users input. Page 0 also includes three menu options: (1) balance; (2) pay bills; and (3) transfer funds. With each menu option there is associated a different goto command. The three options leading to goto URL page 1, goto URL page 2 and goto URL page 3, respectively. It is these three options which are displayed to the user in step as S6.

The next step is for the user to select one of the three displayed options. In this instance, he selects balance, which results in a request for the URL for page 1, at step S7. DOMBOUT plug-in 12a is then quizzed again, in step S8, this time to see if page 1 is available from the domestic browser cache 14. If it is not, then step S9 is a standard URL request for the relevant page from internet, via the SMSC and WIG etc. The process then goes on.

On the other hand, figure 5b shows where page 0 has already been added to the domestic browser cache 14, for instance because it has previously been accessed and added through the process illustrated by figure 5a (due to the presence of plug-in parameter P1). In figure 5b steps S1 and S2 are the same as in figure 5a. However, because the answer to step S2 is yes, page 0 can be retrieved immediately from the domestic browser cache 14, from within file EF_{bytecode} 14b and displayed, as before, in step S6. Steps S7, S8 and S9 are then the same as before.

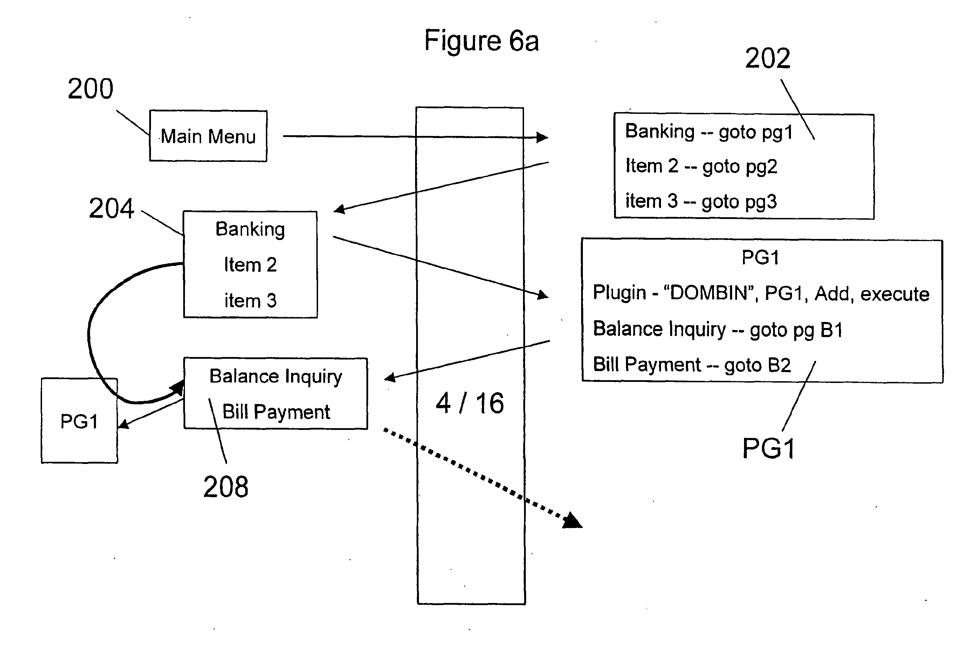

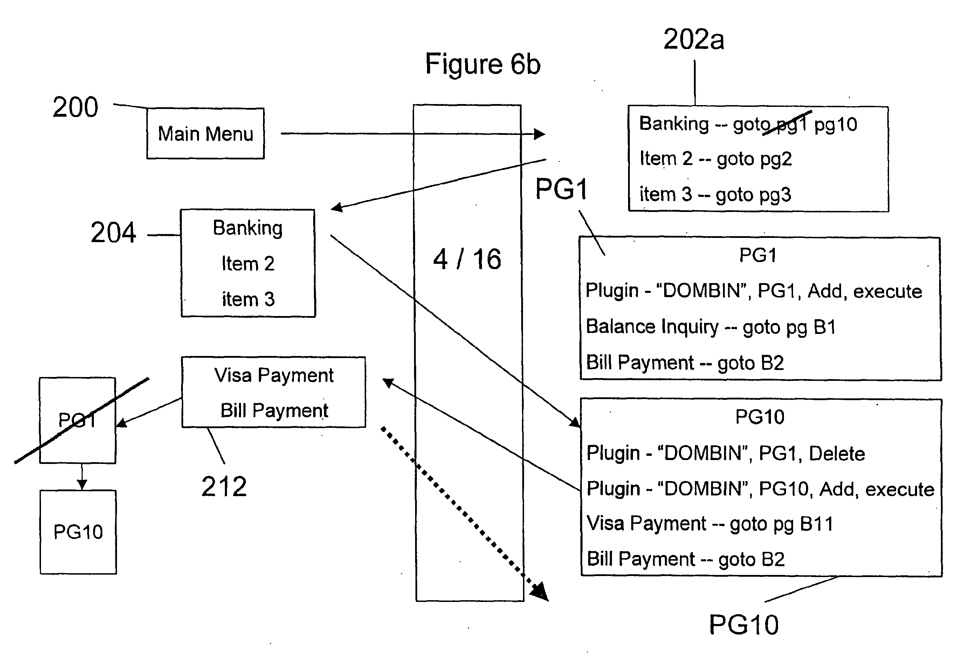

Further operation of this embodiment is also described with reference to schematic figures 6a and 6b.

In figure 6a there is a request for the URL of a main menu 200. Assuming it is not already available in the domestic browser cache 14, this request is sent out via the SMSC and WIG. The relevant main menu page 202 is then retrieved and returned to the SIM card. As with page 0 in figures 5a and 5b, this page requires the display of a menu and getting user input.

The first menu item is "banking", which is then followed by two other items. These three items potentially respectively lead to requests to goto page 1, goto page 2 and goto page 3.

Page 204 is the displayed menu, from which the user selects menu item "banking", which leads to a request for the URL for page 1 being issued. Assuming this is the first time that page 1 has been requested (and it has not already been downloaded onto cache by the operator) then plug-in DOMBOUT 12b will not locate the requested page URL in file EF_{URL} 14a and the URL request will have to be sent out for page 1, via the SMSC and WIG.

Page 1 PG1 has two parameter plug-ins, P1 (Add) and P2 (Execute) and two menu items and expects a user input. When page 1 is retrieved and sent back to the SIM card 2a, it displayed on the telephone screen as page 208, with two menu items "Balance Inquiry" and "Bill Payment". The process will then continue on from there. Thus far, it is very little different from known systems in what is requested and downloaded. However, the next time page 204 is displayed, selecting the "Banking" item will not require that page 1 be sought out from the internet and downloaded. Instead it will be found by plug-in DOMBOUT 12b and displayed more quickly.

On the other hand, figure 6b shows what happens when page 1 is updated. In this instance request 200 is the same as before in figure 6a. However, page 202a (the content of page 0) on the internet has been altered so that selection of the first option does not lead to page 1 but to page 10.

Page 204 that is displayed is then exactly the same as before. However, when "Banking" is selected, this does not lead to a request for page 1, but rather one for page 1. Although page 1 is already present in the domestic browser cache 14, it will be ignored by plug-in DOMBOUT 12b, because it is no longer the relevant page. Instead a URL request will be transmitted for page 10 PG10. This page is accessed and retrieved from the internet. In this instance, page 10 includes various commands. Firstly, it includes the instruction for plug-in DOMBIN 12a to delete page 1 from the domestic browser cache 14. Secondly, it has the instruction for plug-in DOMBIN 12a to add page 10 to the domestic browser cache 14 and for the SIM Browser 10 execute it.

The content on page 10 that is to be displayed is also slightly different. The first item is now 'Visa Payment", as opposed to "Balance Inquiry" which was on page 1. "Visa Payment" leads to a different page B11, although "Bill Payment", which still exists on page 10 leads to the same page B2 as it did on page 1. When page 10 is retrieved and downloaded back onto the SIM card, various commands are executed such that the new page 212 is displayed. For future operations, if "Banking" were selected again from display 204, then the system would go to straight to display 212, without going via page 10 PG10.

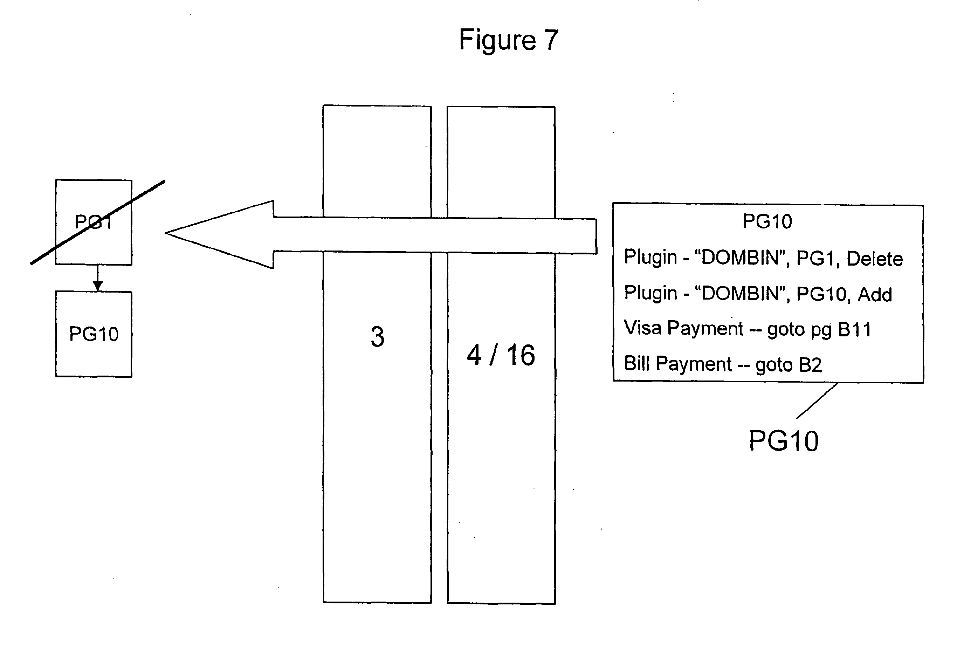

Figure 6b illustrates the updating of page 1 on the domestic browser side to page 10, due to the actions of the mobile user. Figure 7 schematically illustrates the alternative, where the update is pushed onto the domestic browser instead. In this instance, it is the mobile operator who retrieves page 10 and sends it, either from the domestic browser service centre or the WIG to the mobile telephone. The effect is the similar to that shown in figure 7b. Page 1 is deleted from the domestic browser cache and page 10 is stored instead. However, because the user is not running the particular application at the time, page 10 is not executed immediately.

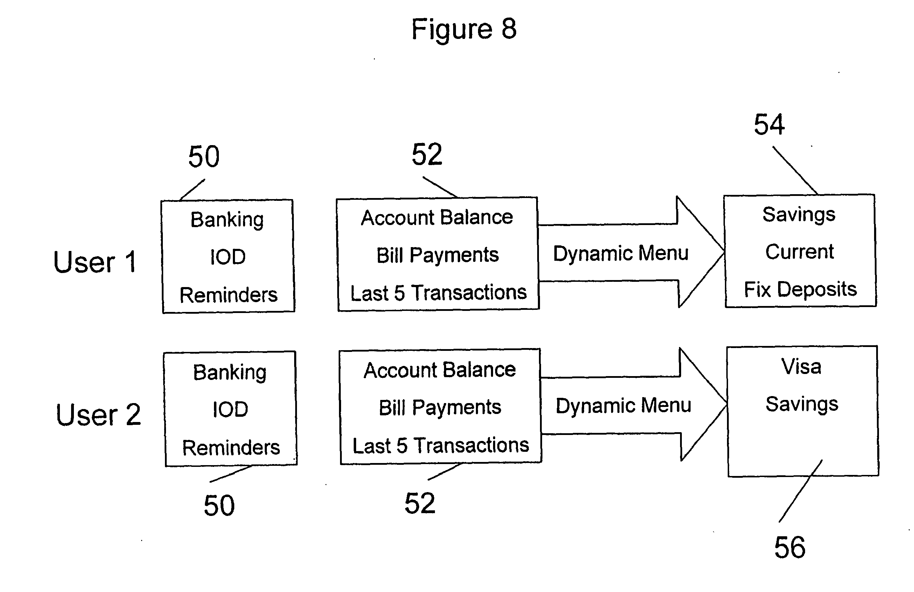

Figure 8 is a schematic representation of how the present invention can be used to create dynamic menus. The result is that two different users make the same choices, but get different results. For instance figure 9 shows the initial retrieved screen 50 for both users is the same, with 3 options "Banking", "IOD" and "Reminders". Selecting "Banking" for either user leads to screen 52 with the 3 options "Account balance", "Bill payments" and "Last five transactions". However, due to their different circumstances, the URLs that would be requested when the "Account balance" option is selected are different. In the case of User 1 the following screen 54 has three options "Savings", "Current" and "Fixed deposits". On the other hand, for user 2 the following screen 56 has only two options "Visa" and "Savings". The dynamic menu for any user might be tailored according to what he usually chooses or what the operator wants the user to choose (perhaps at the behest of another party).

Whilst the above embodiments only show one page within a relevant series being downloaded onto the domestic browser cache 14, there might usually be many more. For instance, in the case of the banking options shown above, all of pages 1 through to 10 might be downloaded saved, such that the first time that the SIM browser might actually send out a URL request would be when requesting a specific account balance itself or sending a password or some such action that requires specific up to date information or the verification of particulars.

In some of the above embodiments, the decision to update the domestic browser cache 14 is that of the person writing the WML page. However, the instruction to update should only be used sparingly, otherwise the cache would fill up too quickly. The decision is preferably left in the hands of the operator, who will develop criteria for deciding whether a page should be downloaded.

With the invention described there is the possibility that frequent downloading and deletion of bytecodes related to WML pages from the SIM browser 10 will result in memory fragmentation in file EF_{bytecode} 14b. Therefore the SIM browser 10 in a further embodiment includes a memory defragmention mechanism. This is initiated automatically as a standard function of Domestic browser, although other options may be available.

In the above embodiments, SIM browser 10 waits until a negative response from plug-in DOMBOUT 12b before transmitting a URL request to the SMSC. In yet another alternative, the URL could be so transmitted at the same time as the request is passed to plug-in DOMBOUT 12b and then cancelled if there is a positive result. This would then prevent delays due to the presence of the DOMBOUT search.

In summary, the features of the present invention can be summarised as follows:
1. URL information/ data can cached into a file.
2. The system intercepts a user's requested URL through a browser and retrieves any previously cached URL information, if applicable.
3. The system allows the operator to initiate the uploading of new applications, individual pages or decks of pages i.e. series of pages within the same WML page via wireless transmission.
4. The system allows the operator to initiate the updating of existing cached applications, individual pages or decks of pages via mobile transmission.
5. This system allows the operator to initiate the deletion of existing cached applications, individual pages or decks of pages via mobile transmission.

With the caching mechanism that the domestic browser technology provides, frequently accessed information can be resident within the mobile card 2a itself, thus saving time and the bandwidth required when accessing remote pages. This is extremely useful because it eliminates the need to perform redundant and expensive retrieval of unchanged information, wirelessly.

In addition the present invention allows easy application and service management and maintenance. In contrast to existing SAT methodology, the domestic browser technology allows the operator to manage and maintain existing applications on the subscribers SIM cards remotely and in a non-intrusive manner, requiring no intervention on the subscriber's part. This includes upgrading, deleting and uploading new applications wirelessly. This contrasts with the current situation where new applications have to be loaded onto the card by hard-wired contact. This flexibility is very important, since it saves costs, time and resources and is more attractive to the mobile user.

Further, because the domestic browser technology is just an extension of the existing SIM browser, it can use much of the existing technology and interfaces.

The invention defines a means to provide a major additional functionality, allowing the operators of services to upload services which are frequently used or required by the user, for instance to a SIM card and, as such, allow the management of different services for different users. In the past such services have been developed using a SIM Application Toolkit. The advantage of such services is that they are very fast. However, they are also extremely difficult to change or update over the air. Where one hasseveral hundred thousand users it is practically an impossible task.

Browser technology brought a new approach. It actually created a SIM Application Toolkit based browser which did not have to be changed but took the complete logic of the service on backend servers. This gives an advantage that the logic of the services can be modified and new services can very easily be provided to all users without any required change on the SIM card. However there is a disadvantage that this operation becomes slow (sometimes to the extent of not acceptable) as the browser has to communicate with the backend server several time for the logic (what to do next) of the service. Domestic browser technology of the present invention takes the best of both technologies and provides fast and updateable services.

Whilst certain exemplary aspects of the invention, have been described, many more would be readily apparent whilst still falling within the scope of the invention as defined in the appended claims.

## Claims

1. A method, operating on a subscriber identification module (2a) in a mobile device, of storing pages of data thereon, said method comprising the steps of:
receiving a transmitted page by wireless transmission;
determining if the received page contains a page store instruction, instructing that the page be stored;
storing said page, if said page store instruction is determined to be present, wherein
said determining step includes determining if said page store instruction is a page store update instruction; and
said storing step replaces the content of a previously stored page with content of the received page if said page store instruction is a page store update instruction; and
said page is received with a page identifier; and
said storing step stores said page identifier separately from said page, wherein the replacing step does not replace said page identifier of said previously stored page; and
determining if the received page contains a page execute instruction, instructing that the page be executed; and
executing said page, if said page execute instruction is determined to be present; and
determining if the received page contains a page delete instruction, identifying a previously stored page to be deleted; and
deleting said identified page from storage, if said page delete instruction is determined to be present.

2. A method according to any claim 1, further comprising the steps of:
issuing a page request as a result of an input from a user;
determining if the requested page is already stored; and
retrieving the requested page from storage, if it is determined to be stored already; or
transmitting a wireless request for said page, if it is determined not to be stored already.

3. A method according to claim 2, wherein the step of determining if the requested page is already stored comprises:
determining if the identifier of the requested page is already stored; and
returning a result that the requested page is not already stored if the identifier of the requested page is not determined to be stored already, without seeking the content of the requested page on the mobile device.

4. A method according to any one of the preceding claims, wherein the mobile device is a mobile telephone.

5. A method of storing pages of data on a mobile device, comprising:
the method of any one of the preceding claims; and
the step of sending the page to be received by the mobile device by wireless transmission.

6. A method according to claim 5, wherein the page is transmitted with a page identifier.

7. A method according to claim 5 or 6, further comprising the step of retrieving said page from a database, such as an internet server, prior to said sending step.

8. A mobile device for use in a communications system, comprising:
a receiver for receiving a transmitted page;
determining means for determining if the received page contains a page store instruction, instructing that the page be stored; and
storage means for storing said page, if said page store instruction is determined to be present,
said determining means is further operable to determine if said page store instruction is a page store update instruction; and
said storage means is further operable to replace the content of a previously stored page with content of the received page if said page store instruction is a page store update instruction, wherein
said determining means and said storage means are provided in a subscriber identity module (2a), and
said storage means is further operable to store a page identifier received with said page separately from said page; and
said storage means, when replacing content, does not replace said page identifier of said previously stored page; and
said determining means is further operable to determine if the received page contains a page execute instruction, instructing that the page be executed; and
further comprising execution means for executing said page, if said page execute instruction is determined to be present; and
said determining means is further operable to determine if the received page contains a page delete instruction, identifying a previously stored page to be deleted; and
said storage means is further operable to delete said identified page therefrom, if said page delete instruction is determined to be present.

9. A device according to claim 8, wherein said storage means comprises at least one memory, one portion of which to be used to store page identifiers and another portion of which to be used to store page contents.

10. A device according to claim 8, wherein said storage means comprises at least two separate memories, one memory of which to be used to store page identifiers and another memory of which to be used to store page contents.

11. A device according to claim 9 or 10, wherein said at least one memory or said one memory and said another memory each comprise a cache memory.

12. A device according to any one of claims 8 to 11, further comprising:
page request issue means to issue a page request as a result of an input from a user; and
transmitter means for transmitting a wireless request for said page ; and wherein
said determining means is further operable to determine if the requested page is already stored; and
said storage means is further operable to retrieve the requested page from storage, if it is determined to be stored already.

13. A device according to claim 12, being operable to transmit said wireless request for said page only when said determining means determines that the requested page is not already stored

14. A device according to claim 12 or 13, wherein, when determining if the requested page is already stored, said determining means:
determines if the identifier of the requested page is already stored; and
returns a result that the requested page is not already stored if the identifier of the requested page is not determined to be stored already, without seeking the content of the requested page from said storage means.

15. A device according to any one of claims 8 to 14, wherein
said receiver is operable to receive an unsolicited wireless transmitted page; and
said determining means and said storage means are operable in respect of such a received page.

16. A device according to claim 15, wherein said receiver, said determining means and said storage means are operable in respect of such an unsolicited transmitted page automatically, without the involvement of a user of the mobile device.

17. A device according to claim 16, wherein said determining means and said storage means are provided in a browser.

18. A communications system for storing pages of data on a mobile device, comprising:
a device according to any one of claims 8 to 17;
transmission means for sending a page with content to said mobile device by wireless transmission; and
page supply means for supplying pages for transmission to said transmission means.

19. A system according to claim 18, wherein said transmission means is further operable to transmit said page with a page identifier.

## Patentansprüche

1. Verfahren, das auf einem Teilnehmeridentifikationsmodul (2a) in einer mobilen Vorrichtung zum Speichern von Seiten aus Daten darauf durchgeführt wird, wobei das Verfahren die folgenden Schritte umfasst:
Empfangen einer übertragenen Seite durch eine drahtlose Übertragung;
Ermitteln, ob die empfangene Seite eine Seitenspeicheranweisung umfasst, die anweist, die Seite zu speichern;
Speichern der Seite, falls ermittelt wird, dass die Seitenspeicheranweisung vorliegt, wobei der Schritt des Ermittelns ein Ermitteln umfasst, ob die Seitenspeicheranweisung eine Seitenspeicheraktualisierungsanweisung ist; und
wobei der Schritt des Speicherns den Inhalt einer zuvor gespeicherten Seite durch einen Inhalt der empfangenen Seite ersetzt, falls die Seitenspeicheranweisung eine Seitenspeicheraktualisierungsanweisung ist; und
wobei die Seite mit einem Seitenbezeichner empfangen wird; und
wobei der Schritt des Speicherns den Seitenbezeichner getrennt von der Seite speichert, wobei der Schritt des Ersetzens nicht den Seitenbezeichner der zuvor gespeicherten Seite ersetzt; und
Ermitteln, ob die empfangene Seite eine Seitenausführungsanweisung umfasst, die anweist, die Seite auszuführen; und
Ausführen der Seite, falls ermittelt wird, dass die Seitenausführungsanweisung vorhanden ist; und
Ermitteln, ob die empfangene Seite eine Seitenlöschanweisung umfasst, die eine zuvor gespeicherte Seite als zu löschend identifiziert; und
Löschen der identifizierten Seite aus einem Speicher, falls ermittelt wird, dass die Seitenlöschanweisung vorliegt.

2. Verfahren nach Anspruch 1, des weiteren umfassend die Schritte:
Ausgeben einer Seitenanfrage als ein Ergebnis einer Eingabe von einem Benutzer;
Ermitteln, ob die angefragte Seite bereits gespeichert ist; und
Abrufen der angefragten Seite aus einem Speicher, falls ermittelt wird, dass sie bereits gespeichert ist; oder
Übertragen einer drahtlosen Anfrage für diese Seite, falls ermittelt wird, dass sie nicht bereits gespeichert ist.

3. Verfahren nach Anspruch 2, wobei der Schritt des Ermittelns, ob die angefragte Seite bereits gespeichert ist, umfasst:
Ermitteln, ob der Bezeichner der angefragten Seite bereits gespeichert ist; und
Zurückgeben eines Ergebnisses, dass die angefragte Seite nicht bereits gespeichert ist, ohne ein Suchen des Inhalts der angefragten Seite auf der mobilen Vorrichtung, falls nicht ermittelt wird, dass der Bezeichner der angefragten Seite bereits gespeichert ist.

4. Verfahren gemäß einem der vorhergehenden Ansprüche, wobei die mobile Vorrichtung ein Mobiltelefon ist.

5. Verfahren zum Speichern von Daten auf einer mobilen Vorrichtung, umfassend:
das Verfahren nach einem der vorhergehenden Ansprüche; und
den Schritt des Sendens der durch die mobile Vorrichtung zu empfangenden Seite durch eine drahtlose Übertragung.

6. Verfahren nach Anspruch 5, wobei die Seite mit einem Seitenbezeichner übertragen wird.

7. Verfahren nach Anspruch 5 oder 6, des weiteren umfassend den Schritt des Abrufens der Seite aus einer Datenbank, wie z. B. einem Internet-Server, vor dem Schritt des Sendens.

8. Mobile Vorrichtung zur Verwendung in einem Kommunikationssystem, umfassend:
einen Empfänger zum Empfangen einer übertragenen Seite;
eine Ermittlungseinrichtung zum Ermitteln, ob die empfangene Seite eine Seitenspeicheranweisung umfasst, die anweist, die Seite zu speichern; und
eine Speichereinrichtung zum Speichern der Seite, falls ermittelt wird, dass die Seitenspeicheranweisung vorliegt,
wobei die Ermittlungseinrichtung des weiteren eingerichtet ist, zu ermitteln, ob die Seitenspeicheranweisung eine Seitenspeicheraktualisierungsanweisung ist; und
wobei die Speichereinrichtung des weiteren eingerichtet ist, den Inhalt einer zuvor gespeicherten Seite durch einen Inhalt der empfangenen Seite zu ersetzen, falls die Seitenspeicheranweisung eine Seitenspeicheraktualisierungsanweisung ist, wobei
die Ermittlungseinrichtung und die Speichereinrichtung in einem Teilnehmeridentitätsmodul (2a) bereitgestellt sind; und
wobei die Speichereinrichtung des weiteren eingerichtet ist, einen Seitenbezeichner zu speichern, der mit der Seite getrennt von der Seite empfangen wird; und
wobei die Speichereinrichtung den Seitenbezeichner der zuvor gespeicherten Seite nicht ersetzt, wenn sie einen Inhalt ersetzt; und
wobei die Ermittlungseinrichtung des weiteren eingerichtet ist, zu ermitteln, ob die empfangene Seite eine Seitenausführungsanweisung umfasst, die anweist, die Seite auszuführen; und
des weiteren umfassend eine Ausführungseinrichtung zum Ausführen der Seite, falls ermittelt wird, dass die Seitenausführungsanweisung vorliegt; und
wobei die Ermittlungseinrichtung des weiteren eingerichtet ist, zu ermitteln, ob die empfangene Seite eine Seitenlöschanweisung umfasst, die eine zuvor gespeicherte Seite als zu löschend identifiziert; und
wobei die Speichereinrichtung des weiteren eingerichtet ist, die identifizierte Seite daraus zu löschen, falls ermittelt wird, dass die Seitenlöschanweisung vorliegt.

9. Vorrichtung nach Anspruch 8, wobei die Speichereinrichtung wenigstens einen Speicher umfasst, von dem ein Abschnitt verwendet wird, um Seitenbezeichner zu speichern, und ein anderer Abschnitt verwendet wird, um Seiteninhalte zu speichern.

10. Vorrichtung nach Anspruch 8, wobei die Speichereinrichtung wenigstens zwei getrennte Speicher umfasst, von denen ein Speicher verwendet wird, um Seitenbezeichner zu speichern, und ein anderer Speicher verwendet wird, um Seiteninhalte zu speichern.

11. Vorrichtung nach Anspruch 9 oder 10, wobei der wenigstens eine Speicher oder der eine Speicher und der andere Speicher jeweils einen Cache-Speicher umfassen.

12. Verfahren nach einem der Ansprüche 8 bis 11, des weiteren umfassend:
eine Seitenanfrageausgabeeinrichtung, zum Ausgeben einer Seitenanfrage als ein Ergebnis einer Eingabe von einem Benutzer; und
eine Sendereinrichtung zum Übertragen einer drahtlosen Anfrage für die Seite; und wobei
die Ermittlungseinrichtung des weiteren eingerichtet ist, zu ermitteln, ob die angefragte Seite bereits gespeichert ist; und
wobei die Speichereinrichtung des weiteren eingerichtet ist, die angefragte Seite aus einem Speicher abzurufen, falls ermittelt wird, dass sie bereits gespeichert ist.

13. Vorrichtung nach Anspruch 12, die eingerichtet ist, die drahtlose Anfrage für die Seite nur zu übertragen, wenn die Ermittlungseinrichtung ermittelt, dass die angefragte Seite nicht bereits gespeichert ist.

14. Vorrichtung nach Anspruch 12 oder 13, wobei, wenn ermittelt wird, ob die angefragte Seite bereits gespeichert ist, die Ermittlungseinrichtung:
ermittelt, ob der Bezeichner der angefragten Seite bereits gespeichert ist; und
ohne ein Suchen des Inhalts der angefragten Seite in der Speichereinrichtung ein Ergebnis zurück gibt, dass die angefragte Seite nicht bereits gespeichert ist, falls nicht ermittelt wird, dass der Bezeichner der angefragten Seite bereits gespeichert ist.

15. Vorrichtung nach einem der Ansprüche 8 bis 14, wobei
der Empfänger eingerichtet ist, eine unverlangt drahtlos übertragene Seite zu empfangen; und
die Ermittlungseinrichtung und die Speichereinrichtung hinsichtlich einer solchen empfangenen Seite eingerichtet sind.

16. Vorrichtung nach Anspruch 15, wobei der Empfänger, die Ermittlungseinrichtung und die Speichereinrichtung hinsichtlich einer solchen unverlangt übertragenen Seite automatisch, ohne den Eingriff eines Benutzers der mobilen Vorrichtung eingerichtet sind.

17. Vorrichtung nach Anspruch 16, wobei die Ermittlungseinrichtung und die Speichereinrichtung in einem Browser bereitgestellt sind.

18. Kommunikationssystem zum Speichern von Seiten mit Daten auf einer mobilen Vorrichtung, umfassend:
eine Vorrichtung nach einem der Ansprüche 8 bis 17;
eine Übertragungseinrichtung zum Senden einer Seite mit Inhalt an die mobile Vorrichtung durch eine drahtlose Übertragung; und
eine Seitenbereitstellungseinrichtung zum Bereitstellen von Seiten zur Übertragung an die Übertragungseinrichtung.

19. System nach Anspruch 18, wobei die Übertragungseinrichtung des weiteren eingerichtet ist, die Seite mit einem Seitenbezeichner zu übertragen.

## Revendications

1. Procédé fonctionnant sur un module d'identification d'abonné (2a) dans un dispositif mobile, destiné à enregistrer des pages de données sur celui-ci, ledit procédé comprenant les étapes consistant à :
- recevoir une page transmise par une transmission sans fil ;
- déterminer si la page reçue contient une instruction d'enregistrement de page, instruisant que la page soit enregistrée ;
- enregistrer ladite page, si ladite instruction d'enregistrement de page est déterminée comme étant présente ; dans lequel ladite étape de détermination comprend la détermination du fait que ladite instruction d'enregistrement de page est une instruction d'actualisation d'enregistrement de page ou non ; et
- ladite étape d'enregistrement remplace le contenu d'une page précédemment enregistrée par le contenu de la page reçue si ladite instruction d'enregistrement de page est une instruction d'actualisation d'enregistrement de page ;
- et ladite page est reçue avec un identificateur de page ; et
- ladite étape d'enregistrement enregistre ledit identificateur de page séparément de ladite page, l'étape de remplacement ne remplaçant pas ledit identificateur de page de ladite page précédemment enregistrée ; et
- déterminer si la page reçue contient une instruction d'exécution de page, instruisant que la page soit exécutée ; et
- exécuter ladite page, si ladite instruction d'exécution de page est déterminée comme étant présente ; et
- déterminer si la page reçue contient une instruction d'effacement de page, identifiant une page précédemment enregistrée comme devant être effacée ; et
- effacer ladite page identifiée des enregistrements, si ladite instruction d'effacement de page est déterminée comme étant présente.

2. Procédé selon la revendication 1, comprenant également les étapes consistant à
- émettre une demande de page à la suite d'une commande d'un utilisateur ;
- déterminer si la page demandée est déjà enregistrée ; et
- récupérer la page demandée dans les enregistrements, s'il est déterminé qu'elle est déjà enregistrée ; ou
- transmettre une demande sans fil pour ladite page, s'il est déterminé qu'elle n'est pas déjà enregistrée.

3. Procédé selon la revendication 2, dans lequel l'étape de détermination du fait que la page demandée est déjà enregistrée comprend :
- la détermination de si l'identificateur de la page demandée est déjà enregistré ; et
- le renvoi d'un résultat que la page demandée n'est pas déjà enregistrée si l'identificateur de la page demandée n'est pas déterminé comme étant déjà enregistré, sans rechercher le contenu de la page demandée sur le dispositif mobile.

4. Procédé selon l'une quelconque des revendications précédentes, dans lequel le dispositif mobile est un téléphone mobile.

5. Procédé d'enregistrement de pages de données sur un dispositif mobile, comprenant :
- le procédé selon l'une quelconque des revendications précédentes et
- l'étape d'envoi de la page qui doit être reçue par le dispositif mobile par transmission sans fil.

6. Procédé selon la revendication 5, dans lequel la page est transmise avec un identificateur de page.

7. Procédé selon la revendication 5 ou 6, comprenant également l'étape de récupération de ladite page depuis une base de données, telle qu'un serveur internet, avant ladite étape d'envoi.

8. Dispositif mobile destiné à être utilisé dans un système de communications, comprenant :
- un récepteur pour recevoir une page transmise;
- un moyen de détermination pour déterminer si la page reçue contient une instruction d'enregistrement de page, instruisant que la page soit enregistrée ; et
- un moyen d'enregistrement pour enregistrer ladite page, si ladite instruction d'enregistrement de page est déterminée comme étant présente.
- ledit moyen de détermination pouvant également fonctionner afin de déterminer si ladite instruction d'enregistrement de page est une instruction d'actualisation d'enregistrement de page ; et
- ledit moyen d'enregistrement pouvant également fonctionner pour remplacer le contenu d'une page précédemment enregistrée par le contenu de la page reçue si ladite instruction d'enregistrement de page est une instruction d'actualisation d'enregistrement de page ; dans lequel
- ledit moyen de détermination et ledit moyen d'enregistrement sont disposés dans un module d'identification d'abonné (2a) ; et
- ledit moyen d'enregistrement peut également fonctionner afin d'enregistrer un identificateur de page reçue avec ladite page séparément de ladite page ; et
- ledit moyen d'enregistrement, lors du remplacement du contenu, ne remplace pas ledit identificateur de page de ladite page précédemment enregistrée ; et
- ledit moyen de détermination peut également fonctionner afin de déterminer si la page reçue contient une instruction d'exécution de page, instruisant que la page soit exécutée ; et
- comprenant également un moyen d'exécution pour exécuter ladite page, si ladite instruction d'exécution de page est déterminée comme étant présente ; et
- ledit moyen de détermination peut également fonctionner afin de déterminer si la page reçue contient une instruction d'effacement de page, identifiant une page précédemment enregistrée comme devant être effacée ; et
- ledit moyen d'enregistrement peut également fonctionner pour effacer ladite page identifiée de celui-ci, si ladite instruction d'effacement de page est déterminée comme étant présente.

9. Dispositif selon la revendication 8, dans lequel ledit moyen d'enregistrement comprend au moins une mémoire, dont une partie est utilisée pour enregistrer les identificateurs de page et dont une autre partie est utilisée pour enregistrer les contenus des pages.

10. Dispositif selon la revendication 8, dans lequel ledit moyen d'enregistrement comprend au moins deux mémoires séparées, l'une desdites mémoires étant utilisée pour enregistrer les identificateurs de page et l'autre mémoire étant utilisée pour enregistrer les contenus des pages.

11. Dispositif selon la revendication 9 ou 10, dans lequel ladite au moins une mémoire ou ladite une mémoire et ladite autre mémoire comprennent chacune une mémoire cache.

12. Dispositif selon l'une quelconque des revendications 8 à 11, comprenant également :
- un moyen d'émission de demande de page pour émettre une demande de page à la suite d'une commande d'un utilisateur ; et
- un moyen d'émission pour émettre une demande sans fil pour ladite page ; et dans lequel :
- ledit moyen de détermination peut également fonctionner afin de déterminer si la page demandée est déjà enregistrée ; et
- ledit moyen d'enregistrement peut également fonctionner afin de récupérer la page demandée des enregistrements, s'il est déterminé qu'elle est déjà enregistrée.

13. Dispositif selon la revendication 12, utilisable pour transmettre ladite demande sans fil pour ladite page seulement quand ledit moyen de détermination détermine que la page demandée n'est pas déjà enregistrée.

14. Dispositif selon la revendication 12 ou 13, dans lequel, lors de la détermination du fait que la page demandée est déjà enregistrée ou non, ledit moyen de détermination :
- détermine si l'identificateur de la page demandée est déjà enregistré ; et
- renvoie un résultat indiquant que la page demandée n'est pas déjà enregistrée si l'identificateur de la page demandée n'est pas déterminé comme étant déjà enregistré, sans rechercher le contenu de la page demandée à partir dudit moyen d'enregistrement.

15. Dispositif selon l'une quelconque des revendications 8 à 14, dans lequel :
- ledit récepteur peut fonctionner pour recevoir une page transmise sans fil non sollicitée ; et
- ledit moyen de détermination et ledit moyen d'enregistrement sont utilisables en liaison avec ladite page reçue.

16. Dispositif selon la revendication 15 dans lequel ledit récepteur, ledit moyen de détermination et ledit moyen d'enregistrement sont utilisables en liaison avec une telle page non sollicitée transmise automatiquement, sans l'implication d'un utilisateur du dispositif mobile.

17. Dispositif selon la revendication 16, dans lequel ledit moyen de détermination et ledit moyen d'enregistrement sont disposés dans un navigateur.

18. Système de communication pour enregistrer des pages de données sur un dispositif mobile, comprenant :
- un dispositif selon l'une quelconque des revendications 8 à 17 ;
- un moyen d'émission pour envoyer une page avec un contenu au dit dispositif mobile par transmission sans fil ; et
- un moyen d'approvisionnement de pages pour approvisionner des pages pour l'émission au dit moyen d'émission.

19. Système selon la revendication 18, dans lequel ledit moyen d'émission peut également fonctionner pour émettre ladite page avec un identificateur de page.
